# NEW EUROPEAN PATENT SPECIFICATION

(11) **EP 2 718 232 B2**
(45) Date of publication and mention of the opposition decision: **04.09.2019**
(45) Mention of the grant of the patent: 02.11.2016
(21) Application number: 12738188.7
(22) Date of filing: 06.06.2012
(51) Int. Cl.: C02F 1/00, B01D 27/00, B01D 27/08

(54) **KIT FOR ENABLING A FLOW SHUT-OFF VALVE IN REPLACEABLE CARTRIDGE FILTER SYSTEMS**
KIT ZUR AKTIVIERUNG EINES FLUSSSPERRVENTILS IN SYSTEMEN MIT AUSTAUSCHBAREN FILTERPATRONEN
KIT POUR L'ACTIONNEMENT D'UNE VALVE D'ARRÊT DANS DES SYSTÈMES DE FILTRE À CARTOUCHE REMPLAÇABLE

(30) Priority: 07.06.2011 IT PD20110185
(43) Date of publication of application: 16.04.2014
(73) Proprietor: Laica S.p.A., 36021 Barbarano Vicentino (VI) (IT)
(72) Inventor: Moretto, Maurizio, I-36100 Vicenza (IT)
(74) Representative: Locas, Davide
(86) International application number: PCT/IB2012/052854
(87) International publication number: WO 2012/168880

(56) References cited:
- WO-A1-2009/015679
- WO-A1-2010/081845
- DE-A1-102009 000 231
- DE-U1-202010 006 889
- US-B1- 6 238 552

## Description

The invention relates to an element for enabling a flow shut-off valve in replaceable cartridge filter systems, particularly in percolating filter systems for ensuring the potability of water and other beverages There are known percolating filter systems which are typically jug-shaped, with a separator element which divides the jug into an upper container, for receiving the water to be filtered, and a lower container, for receiving the filtered water. The two containers communicate solely through a conduit in which a filter cartridge is placed so that the whole of the flow passes through it. Downstream of the cartridge in the conduit there is a normally closed shut-off valve which is made to open, when the filter cartridge is inserted into the conduit, by an enabling element which generally forms part of the filter cartridge. Examples of this technology are described in International Patent Applications WO 2009 015679 and WO 2010 081845. WO 2010 081845 also discloses the possibility of using an enabling element in the form of a resilient plate or a resilient cylinder, or an element formed by a sleeve having an upper flange formed as an element independent of the cartridge.

Another example of prior art is DE102009000231.

However, the enabling elements described in these applications are not normally adaptable for use with different types of shut-off valves developed by the manufacturers of filter jugs. In particular, the fact that resilient materials are used, while allowing a degree of elasticity in compression, and therefore being useful in cases where the aperture of the valve body, considered as the combination of the valve itself and the passage in which it is housed, means that only a modest degree of expansion is possible, unless use is made of highly resilient materials which cannot provide adequate durability and ease of insertion of the enabling element into the valve body.

On the other hand, there is a requirement in the filter system industry for cartridges suitable for use in jugs produced by different manufacturers. In this case, the problem arises of adapting the design of filter cartridges to a plurality of filter systems which are similar to each other but which differ in the details of their construction.

The problem of adaptability in filter systems has also been tackled in United States Patent 6 238 552, which describes a cartridge filter comprising a series of annular flanges with different diameters, made of resilient material, with the aim of allowing the same cartridge to be used in different models of filter jug.

However, this document provides no useful teachings concerning the solution of the problem of adapting shut-off valve enabling elements to different filter systems.

The object of the present invention is to provide a kit which can meet this requirement while being versatile and inexpensive to produce. This object is achieved by means of an enabling element made according to the claims below, and by means of a kit comprising the element.

The features and advantages of the invention will become clear from the following detailed description of some preferred examples of embodiment thereof, illustrated, for the purposes of guidance and in a non-limiting way, with reference to the appended drawings, in which:
- Figure 1 is a schematic view, with parts separated, of a percolating filter system using a kit according to the invention;
- Figures 2A to 2C are, respectively, a perspective view, a front view and a side view of an example of a flow shut-off valve enabling element not according to the present invention;
- Figures 3A to 3C are, respectively, a perspective view, a front view and a sectional side view of a first embodiment of the present invention;
- Figures 4A to 4C are, respectively, a perspective view, a front view and a side view of a second embodiment of the present invention;
- Figures 5A to 5C are, respectively, a perspective view, a front view and a side view of a third embodiment of the present invention;
- Figures 6A to 6C are, respectively, a perspective view, a front view and a side view of a fourth embodiment of the present invention;
- Figures 7A to 7C are, respectively, a perspective view, a front view and a sectional side view of a filter cartridge incorporating the enabling element according to the example of Figure 2A to 2C; and
- Figures 8A to 8C are, respectively, a perspective view, a front view and a sectional side view of a cup-shaped casing which can be fitted on the outside of a conventional cartridge and which incorporates the enabling element of this invention.

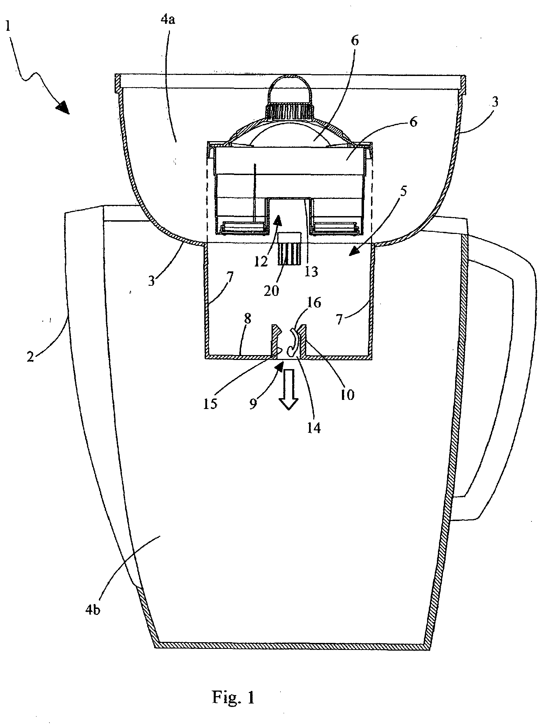

In Figure 1, the number 1 indicates the whole of a percolating filter device including a jug 2 in which is placed a dividing element (or hopper) 3 which divides the jug 2 into an upper container 4a, for receiving the water to be filtered, and a lower container 4b, for receiving the filtered water. The two containers 4a, 4b communicate solely through a conduit which forms a seat 5 to receive a filter cartridge 6. The seat 5 has a lateral shell 7 and a base 8 in which a valve passage 9 opens to form the only opening for outflow from the upper to the lower container. The valve passage 9 is generally cylindrical in shape, with a sleeve-like portion 10 projecting towards the cartridge 6 where it is received in a recess 12 in the base 13 of the cartridge. A valve seat 14, on which a valve plug 15 normally rests, is formed in the distal part of the sleeve-like portion relative to the cartridge 6. The plug 15 has an operating arm 16 which extends into the portion 10 in such a way that the plug 15 can be displaced from the valve seat 14 by action on the arm 16 in order to open the valve. Thus the passage 9, together with the seat 14 and the corresponding plug 15, form a flow shut-off valve which, when enabled, allows the passage of liquid from the upper container 4a to the lower container 4b through the filter cartridge, while it prevents communication between the two containers when the valve is disabled.

The displacement of the plug 15, and the consequent enabling of the shut-off valve, take place, according to the teachings of WO 2010 081845, by means of an appendage of cylindrical shape projecting from the base of the cartridge 6, this appendage being fitted into the sleeve-like portion 10 when the cartridge is inserted into the seat 5, thereby engaging and deflecting the operating arm of the plug so as to displace it from the valve seat 14. This appendage therefore acts as an enabling element 20 of the valve and has the function of interacting with the (normally closed) plug housed in the valve passage in order to move it to the open position.

According to the prior art, the plug can be enabled only when there is a perfect match between the geometry of the appendage of the cartridge and that of the valve system formed by the sleeve-like portion and the plug. Clearly, therefore, the jug 1 cannot be used in the absence of a suitable enabling element which matches these geometries.

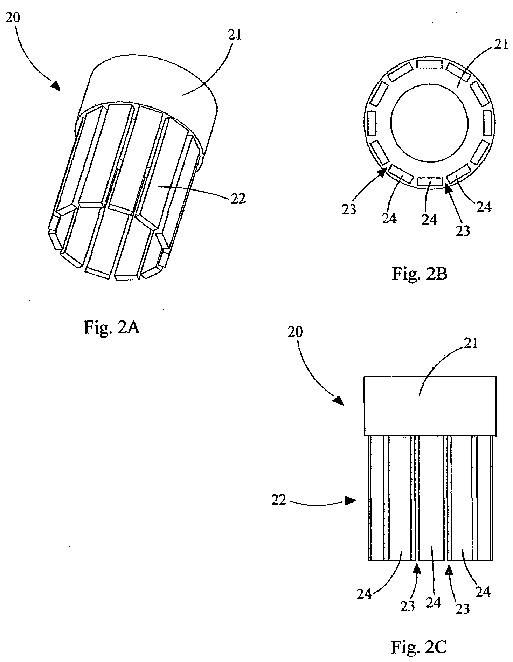

As shown in Figures 2A to 2C, it is possible to open the valve passage 9 by means of an approximately cylindrical enabling element 20 having a predominantly axial extension with a base 21 and an operating portion 22 axially contiguous to each other. More generally, the enabling element 20 can have a tubular shape with circular or other cross section.

The operating portion 22 is made so as to be at least partially insertable into the valve passage of the valve in order to be able to interact as mentioned above with the operating arm 16 and move the plug to the open position. The base 21 can also be used for the purpose of grasping the enabling element 20 with the hand when it is inserted into the valve passage 9, or alternatively for the purpose of joining it to or fitting it into the base 13 of the cartridge.

The operating portion 22 of the enabling element has a radial deformability which is greater than the radial deformability of the base 21. This is achieved by providing the operating portion 22 of the enabling element 20 either with expandable portions 23 extending axially, or with expandable portions extending in a radial direction, according to different embodiments, some of which are described below.

In the example shown in Figures 2A to 2C, the axial expandable portions are formed by a plurality of slits 23 which separate a corresponding plurality of strip-like appendages 24 extending jointly from the base 21, while the radial expandable portions are provided by having a shell thickness of the operating portion 22 which is less than the shell thickness of the base 21. The appendages 24 are arranged in a ring around the axis of the enabling element.

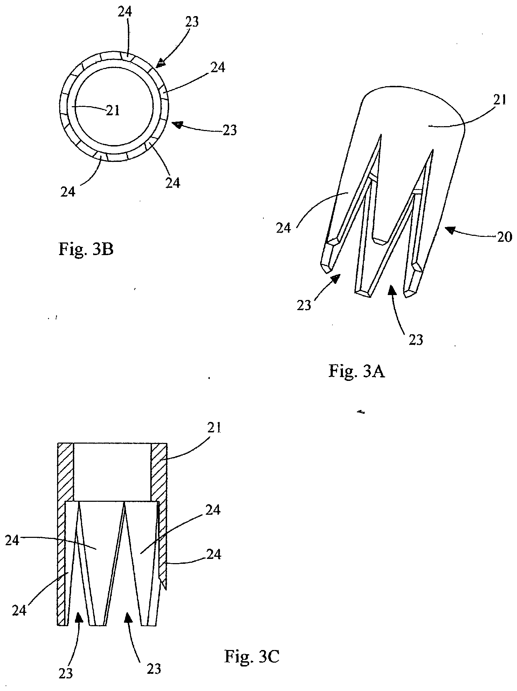

In a first embodiment of the invention, shown in Figures 3A to 3C, the appendages 24 each have an approximately triangular shape, tapered in the direction away from the base 21, and the slits 23 are V-shaped with their vertices facing the base 21. This provides a radial deformability of the operating portion 22 which increases in the direction away from the base 21.

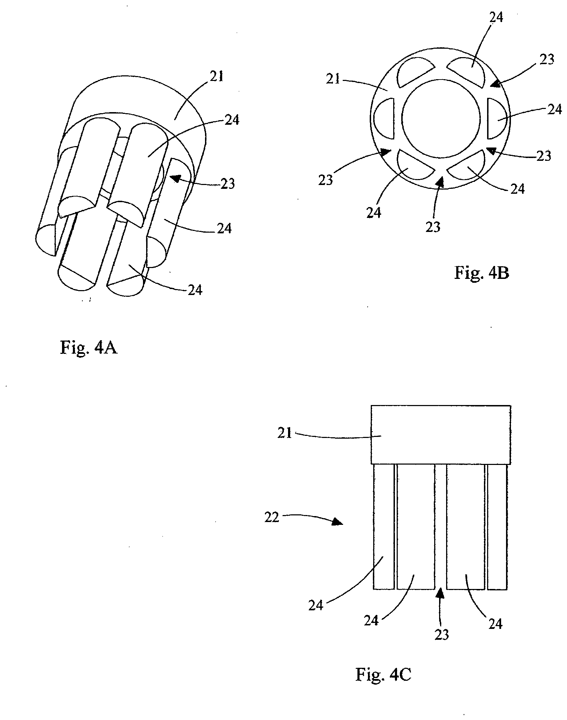

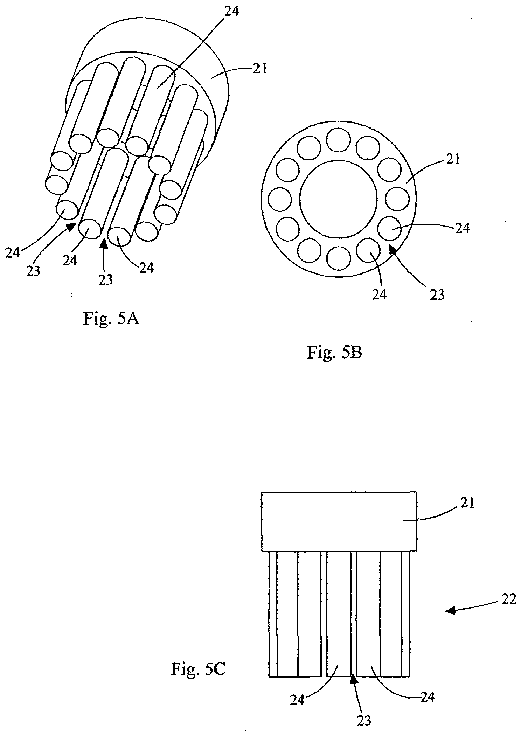

Figures 4A to 4C and 5A to 5C show two other possible examples of appendages 24, of semicylindrical or cylindrical shape for example, on corresponding enabling elements.

In all cases, each appendage is deformable independently of the adjacent appendages, thereby further increasing the local deformability of the appendages. This also increases their adaptability to different geometries of the plug, the valve passage and the plug arm.

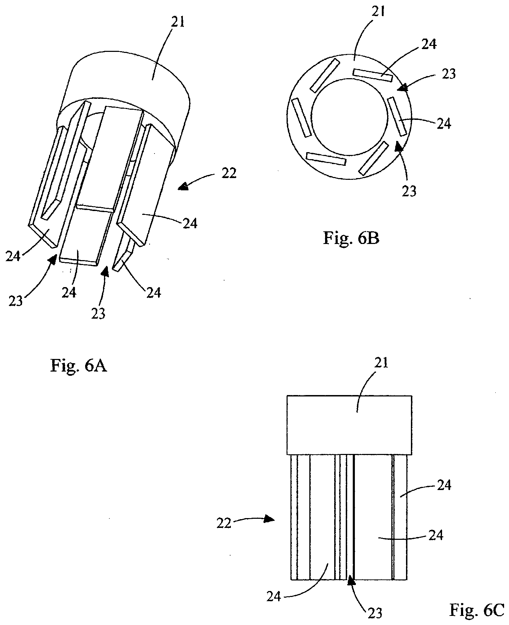

A further embodiment is shown in Figures 6A to 6C, in which the strip-like appendages 24 extend axially in a spiral arrangement from the base 21.

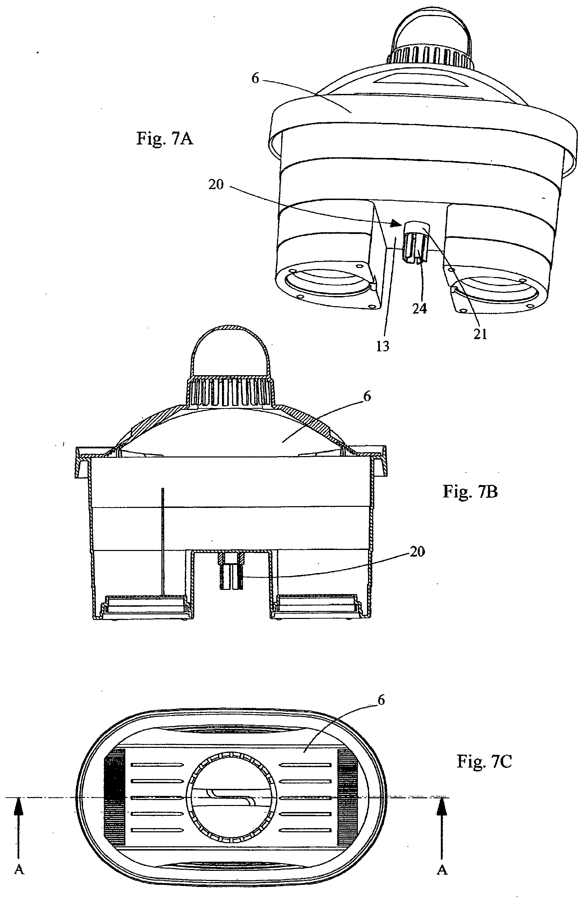

Figures 7A to 7C show an example in which the enabling element 20 is made in one piece with the cartridge 6 and is fixed to it at the base 13 of the recess 12 by means of the base part 21.

In this case, the enabling element is similar to that of Figures 2A to 2C, but clearly any other example of embodiment of the element 20 is suitable for this application.

It should also be noted that, in the present embodiment, the filtered water leaving the cartridge can pass between the outer lateral surface of the enabling element 20 and the sleeve-like portion 10, which for this purpose can have a suitable cavity similar to that of the solution described in WO 2010 081845.

In this case, therefore, the correct operation of the enabling element 20 can be ensured provided that the operating portion 22 has a tubular shape which allows the operating arm 16 to be housed therein, while the base 21 can be made in the form of a cylinder or other solid body. This constructional solution can also be extended to other embodiments if the flow of filtered water leaving the cartridge is intended to pass between the outer lateral surface of the operating portion 22 and the sleeve-like portion 10.

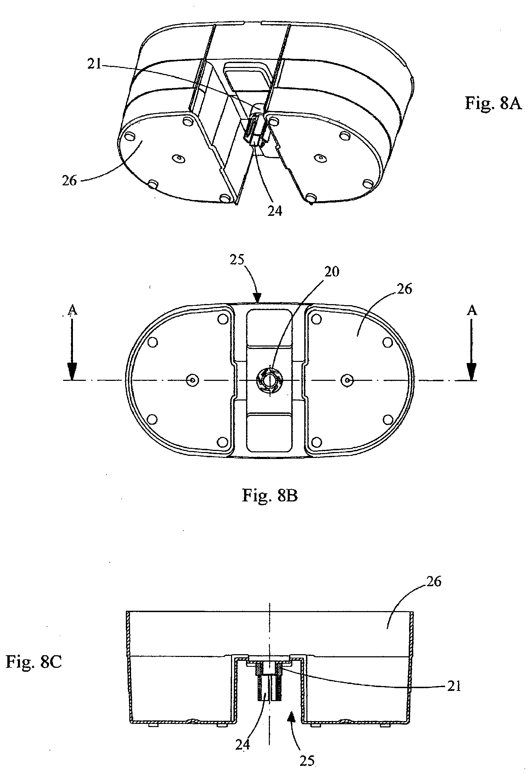

Figures 8A to 8C show another and final embodiment of the invention in which the enabling element 20 is made in one piece with a cup-shaped casing 26 applied to the outside of a conventional cartridge, which in itself is not provided with any enabling element, to adapt it to the filter system of this invention. In this case also, the cup-shaped casing has a central recess 25 in the base of which the enabling element is fixed by the corresponding base 21.

As can be seen in the drawings, the enabling element in question is similar to that of Figures 2A to 2C, but clearly any other example of embodiment of the element 20 is suitable for this application.

When it is desired to enable the filter system of this invention the enabling element simply has to be inserted into the valve passage in such a way that the operating portion 22 interacts with the arm 16 of the plug, thereby moving the latter from the valve seat so as to allow the flow to take place.

The difference in deformability between the base 21 and the operating portion 22 allows the enabling element to be adapted more effectively to the different geometries of valve systems, since it can be deformed and consequently adapted to plugs of different shapes. Furthermore, the enabling element according to the present invention requires less effort for the insertion and removal of the enabling element, these operations being potentially difficult because of the small size of the element 20 and possible manufacturing defects. By using the slits it is also possible to provide a high degree of adaptability both in compression and in expansion, with the possibility of using conventional materials including those which are not excessively elastic, thus achieving optimal ease of insertion and high strength of the enabling element.

## Claims

1. An enabling element (20) for a flow shut-off valve in replaceable cartridge filter systems, the element having an axial extension and comprising a base (21) and an operating portion (22) which are axially contiguous, the operating portion (22) having a tubular shape and being at least partially insertable into a valve passage (9) of the shut-off valve in order to interact with a normally closed plug (15) housed in the valve passage and move it to the open position, wherein the operating portion (22) of the enabling element (20) has at least one slit (23) which forms a corresponding expandable portion extending in an axial direction of the operating portion (22) in such a way that the operating portion (22) has a radial deformability which is greater than the deformability of the base (21), wherein the operating portion (22) has a plurality of axially extending expandable portions (23) and the operating portion has a plurality of appendages (24) extending jointly from the base (21) in a substantially axial direction with the axial expandable portions (23) located between them, **characterized in that** the appendages (24) are placed in a substantially spiral arrangement around the axis of the enabling element (20) and **in that in that** each appendage (24) of the operating portion (22) has adjacent appendages, each appendage (24) being deformable independently of the adjacent appendages.

2. An enabling element (20) for a flow shut-off valve in replaceable cartridge filter systems, the element having an axial extension and comprising a base (21) and an operating portion (22) which are axially contiguous, the operating portion (22) having a tubular shape and being at least partially insertable into a valve passage (9) of the shut-off valve in order to interact with a normally closed plug (15) housed in the valve passage and move it to the open position, wherein the operating portion (22) of the enabling element (20) has at least one slit (23) which forms a corresponding expandable portion extending in an axial direction of the operating portion (22) in such a way that the operating portion (22) has a radial deformability which is greater than the deformability of the base (21), wherein the operating portion (22) has a plurality of axially extending expandable portions (23) and the operating portion has a plurality of appendages (24) extending jointly from the base (21) in a substantially axial direction with the axial expandable portions (23) located between them, **characterized in that** the appendages (24) are semicylindrical or cylindrical in shape and **in that in that** each appendage (24) of the operating portion (22) has adjacent appendages, each appendage (24) being deformable independently of the adjacent appendages.

3. An enabling element (20) for a flow shut-off valve in replaceable cartridge filter systems, the element having an axial extension and comprising a base (21) and an operating portion (22) which are axially contiguous, the operating portion (22) having a tubular shape and being at least partially insertable into a valve passage (9) of the shut-off valve in order to interact with a normally closed plug (15) housed in the valve passage and move it to the open position, wherein the operating portion (22) of the enabling element (20) has at least one slit (23) which forms a corresponding expandable portion extending in an axial direction of the operating portion (22) in such a way that the operating portion (22) has a radial deformability which is greater than the deformability of the base (21), wherein the operating portion (22) has a plurality of axially extending expandable portions (23) and the operating portion has a plurality of appendages (24) extending jointly from the base (21) in a substantially axial direction with the axial expandable portions (23) located between them, **characterized in that** each of the appendages (24) has an approximately triangular shape and is tapered in the direction away from the base (21) and **in that in that** each appendage (24) of the operating portion (22) has adjacent appendages, each appendage (24) being deformable independently of the adjacent appendages.

4. An enabling element (20) according to Claim 2 or 3, wherein the appendages (24) are placed in a substantially ring-shaped arrangement around the axis of the enabling element (20).

5. An enabling element (20) according to any one of the preceding claims, wherein the operating portion (22) has radially extending expandable portions.

6. A kit comprising a replaceable filter cartridge (6) for a percolating filter device (1) of the type including a divider element (3) which divides the device (1) into an upper container (4a) for receiving the water to be filtered and a lower container (4b) for receiving the filtered water, the two containers (4a, b) communicating with each other solely through a conduit which forms a seat (5) for receiving the filter cartridge (6) and a flow shut-off valve which can selectively allow or prevent the flow of liquid between the upper container (4a) and the lower container (4b), and an enabling element (20) according to any one of Claims 1 to 5.

7. A kit according to Claim 6, wherein the enabling element (20) is made in one piece with the cartridge (6) and is fixed by means of the base (21) in a recess (12) formed in the bottom (13) of the cartridge (6).

8. A kit comprising a cup-shaped casing (26), which can be fitted into a replaceable filter cartridge (6) for a percolating filter device (1), and an enabling element (20) according to any one of Claims 1 to 5.

9. A kit according to Claim 8, wherein the cup-shaped casing includes a central recess (25) in which the enabling element (20) is fixed by means of its base (21), the enabling element (20) being made in one piece with the cup-shaped casing.

## Patentansprüche

1. Freigabeelement (20) für ein Flusssperrventil in Systemen mit austauschbaren Filterpatronen, wobei das Element eine axiale Erstreckung aufweist und eine Basis (21) und einen Betätigungsabschnitt (22) aufweist, die axial benachbart sind, wobei der Betätigungsabschnitt (22) eine rohrförmige Gestalt aufweist und mindestens teilweise in einen Ventilkanal (9) des Sperrventils einsetzbar ist, um mit einem normalerweise geschlossenen Pfropfen (15) zu interagieren, der in dem Ventilkanal untergebracht ist, um ihn in die Offenstellung zu bewegen, wobei der Betätigungsabschnitt (22) des Freigabeelements (20) mindestens einen Schlitz (23) aufweist, der einen entsprechenden aufweitbaren Abschnitt bildet, welcher sich in axialer Richtung des Betätigungsabschnitts (22) in der Weise erstreckt, dass der Betätigungsabschnitt (22) eine radiale Verformbarkeit aufweist, die größer ist als die Verformbarkeit der Basis (21), wobei bei dem der Betätigungsabschnitt (22) eine Mehrzahl von sich axial erstreckenden aufweitbaren Abschnitten (23) besitzt und der Betätigungsabschnitt eine Mehrzahl von Anhängseln (24) aufweist, die sich vereint ausgehend von der Basis (21) in im wesentlichen axialer Richtung mit zwischen ihnen befindlichen axial aufweitbaren Abschnitten (23) erstrecken, **dadurch gekennzeichnet, dass** die Anhängsel (24) in einer im Wesentlichen spiralförmigen Anordnung um die Achse des Freigabeelements (20) herumplaziert sind, und dass jedes Anhängsel des Betätigungsabschnitts (33) benachbarte Anhängsel besitzt, wobei jedes Anhängsel (24) unabhängig von den benachbarten Anhängseln verformbar ist.

2. Freigabeelement (20) für ein Flusssperrventil in Systemen mit austauschbaren Filterpatronen, wobei das Element eine axiale Erstreckung aufweist und eine Basis (21) und einen Betätigungsabschnitt (22) aufweist, die axial benachbart sind, wobei der Betätigungsabschnitt (22) eine rohrförmige Gestalt aufweist und mindestens teilweise in einen Ventilkanal (9) des Sperrventils einsetzbar ist, um mit einem normalerweise geschlossenen Pfropfen (15) zu interagieren, der in dem Ventilkanal untergebracht ist, um ihn in die Offenstellung zu bewegen, wobei der Betätigungsabschnitt (22) des Freigabeelements (20) mindestens einen Schlitz (23) aufweist, der einen entsprechenden aufweitbaren Abschnitt bildet, welcher sich in axialer Richtung des Betätigungsabschnitts (22) in der Weise erstreckt, dass der Betätigungsabschnitt (22) eine radiale Verformbarkeit aufweist, die größer ist als die Verformbarkeit der Basis (21), wobei bei dem der Betätigungsabschnitt (22) eine Mehrzahl von sich axial erstreckenden aufweitbaren Abschnitten (23) besitzt und der Betätigungsabschnitt eine Mehrzahl von Anhängseln (24) aufweist, die sich vereint ausgehend von der Basis (21) in im wesentlichen axialer Richtung mit zwischen ihnen befindlichen axial aufweitbaren Abschnitten (23) erstrecken, **dadurch gekennzeichnet, dass** die Anhängsel (24) eine halbzylindrische oder zylindrische Form aufweisen, und dass jedes Anhängsel (24) des Betätigungsabschnitts (22) benachbarte Anhängsel aufweist, wobei jedes Anhängsel (24) unabhängig von den benachbarten Anhängseln verformbar ist.

3. Freigabeelement (20) für ein Flusssperrventil in Systemen mit austauschbaren Filterpatronen, wobei das Element eine axiale Erstreckung aufweist und eine Basis (21) und einen Betätigungsabschnitt (22) aufweist, die axial benachbart sind, wobei der Betätigungsabschnitt (22) eine rohrförmige Gestalt aufweist und mindestens teilweise in einen Ventilkanal (9) des Sperrventils einsetzbar ist, um mit einem normalerweise geschlossenen Pfropfen (15) zu interagieren, der in dem Ventilkanal untergebracht ist, um ihn in die Offenstellung zu bewegen, wobei der Betätigungsabschnitt (22) des Freigabeelements (20) mindestens einen Schlitz (23) aufweist, der einen entsprechenden aufweitbaren Abschnitt bildet, welcher sich in axialer Richtung des Betätigungsabschnitts (22) in der Weise erstreckt, dass der Betätigungsabschnitt (22) eine radiale Verformbarkeit aufweist, die größer ist als die Verformbarkeit der Basis (21), wobei bei dem der Betätigungsabschnitt (22) eine Mehrzahl von sich axial erstreckenden aufweitbaren Abschnitten (23) besitzt und der Betätigungsabschnitt eine Mehrzahl von Anhängseln (24) aufweist, die sich vereint ausgehend von der Basis (21) in im wesentlichen axialer Richtung mit zwischen ihnen befindlichen axial aufweitbaren Abschnitten (23) erstrecken, **dadurch gekennzeichnet, dass** jedes der Anhängsel (24) eine im Wesentlichen dreieckige Form aufweist und in Richtung weg von der Basis (21) verjüngt ist, und dass jedes Anhängsel (24) des Betätigungsabschnitts (22) benachbarte Anhängsel besitzt, wobei jedes Anhängsel (24) unabhängig von den benachbarten Anhängseln verformbar ist.

4. Freigabeelement (20) nach Anspruch 2 oder 3, bei dem die Anhängsel (24) in einer im wesentlichen ringförmigen Anordnung um die Achse des Freigabeelements (20) herum platziert sind.

5. Freigabeelement (20) nach einem der vorhergehenden Ansprüche, bei dem der Betätigungsabschnitt (22) radial aufweitbare expandierbare Abschnitte aufweist.

6. Kit, umfassend eine austauschbare Filterpatrone (6) für eine Tropf-Filtervorrichtung (1) des Typs mit einem Teilerelement (3), welches die Einrichtung (1) in einen oberen Behälter (4a) zum Aufnehmen des zu filternden Wassers und einen unteren Behälter (4b) zum Aufnehmen des gefilterten Wassers unterteilt, wobei die beiden Behälter (4a, b) miteinander ausschließlich durch eine Leitung kommunizieren, die einen Sitz (5) zum Aufnehmen der Filterpatrone (6) und eines Fluss-sperrventils bildet, das selektiv den Fluss der Flüssigkeit zwischen dem oberen Behälter (4a) und dem unteren Behälter (4b) freigeben oder unterbinden kann, und ein Freigabeelement (20) gemäß einem der Ansprüche 1 bis 5.

7. Kit nach Anspruch 9, bei dem das Freigabeelement (20) einstückig mit der Patrone (6) gebildet ist und mittels der Basis (21) in einer Ausnehmung (12) fixiert ist, welche in dem Boden (13) der Patrone (6) ausgebildet ist.

8. Kit, umfassend ein becherförmiges Gehäuse (26), das in eine austauschbare Filterpatrone (6) für eine Tropffiltereinrichtung (1) eingesetzt werden kann, und ein Freigabeelement (20) nach einem der Ansprüche 1 bis 5.

9. Kit nach Anspruch 8, bei dem das becherförmige Gehäuse eine zentrale Ausnehmung (25) enthält, in der das Freigabeelement (20) mittels seiner Basis (21) fixiert ist, wobei das Freigabeelement (20) einstückig mit dem becherförmigen Gehäuse ausgebildet ist.

## Revendications

1. Elément d'habilitation (20) pour une valve d'interception de flux dans des systèmes filtrants à cartouche substituable, l'élément ayant une extension axiale et comprenant une base (21) et une partie opérationnelle (22) qui sont contiguës de manière axiale, la partie opérationnelle (22) ayant une forme tubulaire et pouvant au moins être partiellement insérée dans un passage de valve (9) de la valve d'interception afin d'interagir avec un obturateur normalement fermé (15) logé dans le passage de valve et le faire passer dans la position ouverte, dans lequel la partie opérationnelle (22) de l'élément d'habilitation (20) a au moins une fente (23) qui forme une partie expansible correspondante s'étendant dans une direction axiale de la partie opérationnelle (22) de sorte que la partie opérationnelle (22) présente une capacité de déformation radiale qui est supérieure à la capacité de déformation de la base (21), dans lequel la partie opérationnelle (22) a une pluralité de parties expansibles (23) s'étendant de manière axiale et la partie opérationnelle a une pluralité d'appendices (24) s'étendant conjointement à partir de la base (21) dans une direction sensiblement axiale avec les parties expansibles axiales (23) positionnées entre eux, **caractérisé en ce que** les appendices (24) sont placés dans un agencement de forme sensiblement en spirale autour de l'axe de l'élément d'habilitation (20) et **en ce que** chaque appendice (24) de la partie opérationnelle (22) a des appendices adjacents, chaque appendice (24) étant indépendamment déformable des appendices adjacents.

2. Elément d'habilitation (20) pour une valve d'interception de flux dans des systèmes filtrants à cartouche substituable, l'élément ayant une extension axiale et comprenant une base (21) et une partie opérationnelle (22) qui sont contiguës de manière axiale, la partie opérationnelle (22) ayant une forme tubulaire et pouvant au moins être partiellement insérée dans un passage de valve (9) de la valve d'interception afin d'interagir avec un obturateur normalement fermé (15) logé dans le passage de valve et le faire passer dans la position ouverte, dans lequel la partie opérationnelle (22) de l'élément d'habilitation (20) a au moins une fente (23) qui forme une partie expansible correspondante s'étendant dans une direction axiale de la partie opérationnelle (22) de sorte que la partie opérationnelle (22) présente une capacité de déformation radiale qui est supérieure à la capacité de déformation de la base (21), dans lequel la partie opérationnelle (22) a une pluralité de parties expansibles (23) s'étendant de manière axiale et la partie opérationnelle a une pluralité d'appendices (24) s'étendant conjointement à partir de la base (21) dans une direction sensiblement axiale avec les parties expansibles axiales (23) positionnées entre eux, **caractérisé en ce que** les appendices (24) ont une forme semi-cylindrique ou cylindrique et **en ce que** chaque appendice (24) de la partie opérationnelle (22) a des appendices adjacents, chaque appendice (24) étant indépendamment déformable des appendices adjacents.

3. Elément d'habilitation (20) pour une valve d'interception de flux dans des systèmes filtrants à cartouche substituable, l'élément ayant une extension axiale et comprenant une base (21) et une partie opérationnelle (22) qui sont contiguës de manière axiale, la partie opérationnelle (22) ayant une forme tubulaire et pouvant au moins être partiellement insérée dans un passage de valve (9) de la valve d'interception afin d'interagir avec un obturateur normalement fermé (15) logé dans le passage de valve et le faire passer dans la position ouverte, dans lequel la partie opérationnelle (22) de l'élément d'habilitation (20) a au moins une fente (23) qui forme une partie expansible correspondante s'étendant dans une direction axiale de la partie opérationnelle (22) de sorte que la partie opérationnelle (22) présente une capacité de déformation radiale qui est supérieure à la capacité de déformation de la base (21), dans lequel la partie opérationnelle (22) a une pluralité de parties expansibles (23) s'étendant de manière axiale et la partie opérationnelle a une pluralité d'appendices (24) s'étendant conjointement à partir de la base (21) dans une direction sensiblement axiale avec les parties expansibles axiales (23) positionnées entre eux, **caractérisé en ce que** chacun des appendices (24) a une forme approximativement triangulaire et est progressivement rétréci dans la direction à distance de la base (21) et **en ce que** chaque appendice (24) de la partie opérationnelle (22) a des appendices adjacents, chaque appendice (24) étant indépendamment déformable des appendices adjacents.

4. Elément d'habilitation (20) selon la revendication 2 ou 3, dans lequel les appendices (24) sont placés dans un agencement de forme sensiblement annulaire autour de l'axe de l'élément d'habilitation (20).

5. Elément d'habilitation (20) selon l'une quelconque des revendications précédentes, dans lequel la partie opérationnelle (22) a des parties expansibles s'étendant de manière radiale.

6. Kit comprenant une cartouche de filtre substituable (6) pour un dispositif de filtre de percolation (1) du type comprenant un élément de division (3) qui divise le dispositif (1) en un récipient supérieur (4a) pour recevoir l'eau à filtrer et en un récipient inférieur (4b) pour recevoir l'eau filtrée, les deux récipients (4a, b) communiquant entre eux uniquement à travers un conduit qui forme un siège (5) pour recevoir la cartouche filtrante (6) et une valve d'interception de flux qui peut permettre ou empêcher sélectivement le flux de liquide entre le récipient supérieur (4a) et le récipient inférieur (4b), et un élément d'habilitation (20) selon l'une quelconque des revendications 1 à 5.

7. Kit selon la revendication 6, dans lequel l'élément d'habilitation (20) est réalisé d'un seul tenant avec la cartouche (6) et est fixé au moyen de la base (21) dans un évidement (12) formé au fond (13) de la cartouche (6).

8. Kit comprenant un boîtier en forme de coupelle (26) qui peut être monté dans une cartouche filtrante substituable (6) pour un dispositif de filtre de percolation (1), et un élément d'habilitation (20) selon l'une quelconque des revendications 1 à 5.

9. Kit selon la revendication 8, dans lequel le boîtier en forme de coupelle comprend un évidement central (25) dans lequel l'élément d'habilitation (20) est fixé au moyen de sa base (21), l'élément d'habilitation (20) étant réalisé d'un seul tenant avec le boîtier en forme de coupelle.
